# EUROPÄISCHE PATENTANMELDUNG

(11) **EP 2 819 275 A1**
(43) Veröffentlichungstag der Anmeldung: **31.12.2014**
(21) Anmeldenummer: 13174333.8
(22) Anmeldetag: 28.06.2013
(51) Int. Cl.: H02K 1/14, H02K 15/02

(54) **Verschiebliches Statorpaket**

(71) Anmelder: HILTI Aktiengesellschaft, 9494 Schaan (LI)
(72) Erfinder: Mahler, Thomas, 18299 Laage (DE)
(74) Vertreter: Hilti Aktiengesellschaft Corporate Intellectual Property

(57) **Zusammenfassung**

Blechlamelle, insbesondere zur Bildung eines Statorpakets für eine elektromagnetische Maschine, wobei die Blechlamelle eine Vorderseite und eine Rückseite, ein Ringelement mit einem Mittelpunkt, einer Innenseite und einer Aussenseite sowie wenigstens ein erstes Polelement und ein zweites Polelement, welches jeweils an der Innenseite des Ringelements positioniert ist und sich in radialer Ausrichtung zu dem Mittelpunkt des Ringelements erstreckt, enthält. Die Blechlamelle enthält wenigstens eine Ausrichtvorrichtung zum Ausrichten der Blechlamelle zu einer zweiten anliegenden Blechlamelle.

Verfahren zum Herstellen eines Statorpakets bestehend aus einer Vielzahl an derartigen Blechlamellen mit den Schritten:
- Aneinanderreihen der Blechlamellen zur Bildung eines zylindrischen Statorpakets, wobei die Ausrichtvorrichtung einer Blechlamelle um einen vorbestimmten Winkel zu der Ausrichtvorrichtung einer jeweils nachfolgenden Blechlamelle angeordnet ist,
- Ausrichten der einzelnen Blechlamellen zueinander mit Hilfe der Ausrichtvorrichtung der entsprechenden Blechlamellen und einer Referenzvorrichtung, und
- Drehen der einzelnen Blechlamellen zueinander mit Hilfe des ersten Verbindungselement und des zweiten Verbindungselement der entsprechenden Blechlamellen.

## Beschreibung

Die vorliegende Erfindung bezieht sich auf eine Blechlamelle, insbesondere zur Bildung eines Statorpakets für eine elektromagnetische Maschine. Die Blechlamelle enthält hierzu eine Vorderseite und eine Rückseite, ein Ringelement mit einem Mittelpunkt, einer Innenseite und einer Aussenseite, sowie wenigstens ein erstes Polelement und ein zweites Polelement, welches jeweils an der Innenseite des Ringelements positioniert ist und sich in radialer Ausrichtung zu dem Mittelpunkt des Ringelements erstreckt.

Darüber hinaus bezieht sich die Erfindung auf ein Verfahren zum Herstellen eines Statorpakets bestehend aus einer Vielzahl an derartigen Blechlamellen.

Als Stator, oder auch als Ständer, bezeichnet man den feststehenden, unbeweglichen Teil einer elektromechanischen Maschine und bildet sozusagen das Gegenstück zu einem Rotor oder Läufer, dem beweglichen Teil einer elektromechanischen Maschine. Bei der elektromechanischen Maschine kann es sich beispielsweise um einen Elektromotor, einen Generator, einen Hydromotor oder eine Pumpe handeln.

Im Inneren des Stators ist ein Rotor (auch Läufer genannt), der in den meisten Fällen aus einer Spule mit Eisenkern (dem sogenannten Anker) besteht, drehbar im Magnetfeld zwischen den Polschuhen des Stators gelagert ist.

Der Stator besteht für gewöhnlich aus einem zylindrischen Blechpaket, welches aus einer Vielzahl an aufeinander gelegten und miteinander verbundenen Blechlamellen gebildet ist. Nachdem die einzelnen Blechlamellen zu dem Blechpaket zusammengefügt sind, werden das Blechpaket und insbesondere die Nuten zwischen den einzelnen Polschuhelementen mit einer Kunststoffisolationsschicht ausgespritzt.

Ein derartiger Stator des Stands der Technik, welcher aus einer Vielzahl von aneinander gereihten Blechlamellen besteht, ist insbesondere in der US-Patentschrift 3,802,068 gezeigt. In dieser Patentschrift ist speziell eine kreisrunde Blechlamelle offenbart, welche einen ersten und einen zweiten Flansch enthält, die einander gegenüberliegend an der Aussenseite der Blechlamelle positioniert sind. Diese Flansche dienen dazu, die zu einem Statorpaket zusammengesetzten einzelnen Blechlamellen mit Hilfe einer Flanschausrichtvorrichtung auszurichten. Die Ausrichtung erfolgt insbesondere dadurch, dass die ersten Flansche der einzelnen Blechlamellen in einem ersten Schacht der Flanschausrichtvorrichtung und die zweiten Flansche der einzelnen Blechlamellen in einem zweiten Schacht der Flanschausrichtvorrichtung ausgerichtet werden.

Bei den Blechlamellen handelt es sich üblicherweise um metallische Ringelemente, die aus einer grösseren Blechplatte gestanzt werden. Bei dem Stanzprozess kann jedoch prozessbedingt nicht ausgeschlossen werden, dass die Blechlamellen nicht absolut plan sind und damit eine Wellenform aufweisen. Das Problem von nicht-plan und wellenförmig ausgestanzten Blechlamellen ist um grösser je dünner die Blechlamellen sind.

Wenn diese wellenförmigen Blechlamellen dann zu dem Blechpaket aufeinander gelegt und miteinander verbunden werden, kumulieren sich diese Ungenauigkeiten bzw. Wellen der einzelnen Blechlamellen zu einem insgesamt schiefen (d.h. hin sich verdreht und/oder gebogen) Blechpaket. Hierdurch sind auch die Innenräume, Passagen, Nuten und Kanäle im und am Stator schief, so dass deren Querschnitte und Durchgänge sowohl kleiner als auch undurchlässiger sind als bei einem geraden Statorpaket. Als Folge hiervon können Probleme bei der Montage und Integration weiteren Komponenten an dem Stator entstehen. Somit müssten beispielsweise kleinere und damit leistungsschwächere Magnete für den Stator verwendet werden, wenn sich der zur Verfügung stehende Bauraum im Inneren des Stators aufgrund der schiefen Bauweise verkleinert. Darüber hinaus könnte es durch ein schiefes Statorpaket auch zu Problemen bei dem korrekten Sitz und der Funktionsweise des Rotors im Inneren des Stators kommen.

Übliche Positionierverfahren, wie etwa das rotatorische Stapeln der Blechlamellen, sind zwar dazu geeignet diese Wellenform der einzelnen Blechlamellen entsprechend auszugleichen, jedoch sind sie wiederum auch mit einer Winkeltoleranz bzw. einer Winkelungenauigkeit der einzelnen Blechlamellen zueinander behaftet, die z.B. zu einer unvorteilhaften Schraubenform des Blechpakets führt. Diese nicht bündig aufeinander gelegten Blechlamellen haben zur Folge, dass der zur Isolation aufgetragene Kunststoff an der Innenseite des Blechpakets mit einem entsprechenden Sicherheitsaufschlag (Aufmass) aufgetragen werden muss, um auch an den Stufen zwischen den zueinander verschobenen Blechlamellen ein Mindestmass an Kunststoffisolation an allen Stellen der Innenseite des Blechpakets sicherzustellen. Jedoch geht dieser Sicherheitsaufschlag an Kunststoffisolation zu Lasten des verfügbaren Wickelraums für die Spulenwicklung und behindert darüber hinaus ebenso die thermische Anbindung des Polelements und insbesondere des Polschuhs an das gut thermisch leitende Blechpaket.

Aufgabe der vorliegenden Erfindung ist es diese vorstehend beschriebenen Probleme zu lösen und speziell eine Blechlamelle, insbesondere zur Bildung eines Statorpakets für eine elektromagnetische Maschine sowie ein Verfahren zum Herstellen eines Statorpakets bestehend aus einer Vielzahl an derartigen Blechlamellen bereitzustellen, welches die Fügeund Einlegetoleranzen bei einem Statorpaket minimiert, um hierdurch eine bestmögliche Nutzung des im Statorpaket vorhandenen Bauraums und insgesamt eine Effizienzsteigerung der durch den Stator und Rotor gebildeten elektromagnetischen Maschine zu erreichen.

Diese Aufgabe wird erfindungsgemäss durch den Gegenstand des unabhängigen Anspruchs 1 und 9 gelöst. Weitere Ausführungsformen des erfindungsgemässen Gegenstands finden sich in den abhängigen Ansprüchen.

Hierzu wird eine Blechlamelle, insbesondere zur Bildung eines Statorpakets für eine elektromagnetische Maschine bereitgestellt, wobei die Blechlamelle eine Vorderseite und eine Rückseite, ein Ringelement mit einem Mittelpunkt, einer Innenseite und einer Aussenseite sowie wenigstens ein erstes Polelement und ein zweites Polelement, welches jeweils an der Innenseite des Ringelements positioniert ist und sich in radialer Ausrichtung zu dem Mittelpunkt des Ringelements erstreckt, enthält.

Erfindungsgemäss ist dabei wenigstens eine Ausrichtvorrichtung zum Ausrichten der Blechlamelle zu einer zweiten anliegenden Blechlamelle vorgesehen.

Des Weiteren wird hierzu ein Verfahren zum Herstellen eines Statorpakets bestehend aus einer Vielzahl an derartigen Blechlamellen bereitgestellt.

Erfindungsgemäss sind zu diesem Verfahren die folgenden Schritte
- Aneinanderreihen der Blechlamellen zur Bildung eines zylindrischen Statorpakets, wobei die Ausrichtvorrichtung einer Blechlamelle um einen vorbestimmten Winkel zu der Ausrichtvorrichtung einer jeweils nachfolgenden Blechlamelle angeordnet ist,
- Ausrichten der einzelnen Blechlamellen zueinander mit Hilfe der Ausrichtvorrichtung der entsprechenden Blechlamellen und einer Referenzvorrichtung, und
- Drehen der einzelnen Blechlamellen zueinander mit Hilfe des ersten Verbindungselement und des zweiten Verbindungselement der entsprechenden Blechlamellen
vorgesehen.

Gemäss einer weiteren vorteilhaften Ausgestaltung der vorliegenden Erfindung kann vorgesehen sein, dass mindestens ein erstes Verbindungselement und ein zweites Verbindungselement zum Verbinden der Blechlamelle mit einer zweiten anliegenden Blechlamelle, wobei das erste Verbindungselemente und das zweite Verbindungselement auf demselben Radius zu dem Mittelpunkt des Ringelements positioniert sind. Hierdurch lässt sich das erste und zweite Verbindungselement um einen gemeinsamen Mittelpunkt für eine entsprechende Positionierung zueinander verdrehen.

Des Weiteren kann entsprechend einer weiteren vorteilhaften Ausgestaltung der vorliegenden Erfindung vorgesehen sein, dass die Ausrichtvorrichtung wenigstens ein erstes Ausrichtelement und ein zweites Ausrichtelement aufweist, wobei das erste Ausrichtelement ausgestaltet ist, um mit Hilfe einer Referenzvorrichtung ein durch aneinander gereihte Blechlamellen gebildetes Blechpaket auszurichten. Durch die unterschiedliche Ausgestaltung der ersten und zweiten Ausrichtelemente ist es möglich, dass die Referenzvorrichtung lediglich an dem ersten Ausrichtelement wirken kann. Es ist dabei insbesondere möglich, dass die Referenzvorrichtung ein Bestandteil eines Umspritzwerkzeugs zum Anbringen einer Kunststoffisolationsschicht an der Innenseite eines Blechpakets ist, wodurch praktischerweise direkt nach dem Ausrichten der einzelnen Blechlamellen zueinander eine Kunststoffisolationsschicht im Inneren des ausgerichteten Blechpakets angebracht und damit auch die einzelnen Blechlamellen fest miteinander verbunden werden können. Hierbei ist es insbesondere vorteilhaft, wenn die Referenzvorrichtung in Form eines zylindrischen Aufnahmebehälters ausgestaltet ist, in den die Blechlamellen eingeführt und zueinander ausgerichtet werden können. Des Weiteren kann es auch möglich sein, dass die einzelnen Blechlamellen mittels eines separaten Fügeprozesses miteinander verbunden werden. Dieser wenigstens eine Fügeprozess kann dabei durchgeführt werden, wenn die Blechlamellen noch in der bzw. an der Referenzvorrichtung angeordnet sind, oder aber nachdem die zu einem Blechpaket aufeinander gelegten Blechlamellen wieder aus bzw. von der Referenzvorrichtung entfernt wurden. Zu den Fügeprozessen können unter anderem Kleben, Schweissen, Löten, Umformen, An- oder Einpressen oder ähnliches gehören.

Darüber hinaus kann es vorteilhaft sein, dass das erste Ausrichtelement und das zweite Ausrichtelement jeweils als Erhebung auf der Aussenseite des Ringelements ausgestaltet ist, wobei das erste Ausrichtelement breiter als das zweite Ausrichtelement ist. Hierdurch kann sichergestellt werden, dass das erste Ausrichtelement fest in der entsprechenden Referenzvorrichtung gehalten ist und gleichzeitig das zweite Ausrichtelement in der entsprechenden Referenzvorrichtung verschiebbar ist.

Es ist des Weiteren auch möglich, dass das erste Ausrichtelement und das zweite Ausrichtelement jeweils als Bohrung auf der Aussenseite des Ringelements ausgestaltet ist, wobei das erste Ausrichtelement einen kleineren Durchmesser aufweist als das zweite Ausrichtelement ist. Hierdurch kann sichergestellt werden, dass das erste Ausrichtelement fest in der entsprechenden Referenzvorrichtung gehalten ist und gleichzeitig das zweite Ausrichtelement zum Ausrichten der Blechlamellen in der entsprechenden Referenzvorrichtung verschiebbar ist.

Um einen möglichst hohen Grad an Ausgleichs- und Ausrichtmöglichkeiten für die Blechlamellen bereitzustellen, ist es entsprechend einer zusätzlichen Ausgestaltungsform der vorliegenden Erfindung vorteilhaft, dass die Anzahl an Ausrichtelementen der Anzahl an Polelementen entspricht.

Ausserdem kann das erste Verbindungselement auf der Vorderseite der Blechlamelle als eine Vertiefung ausgestaltet sein und das zweite Verbindungselement auf der Rückseite der Blechlamelle als eine zu der Vertiefung korrespondierende Erhebung ausgestaltet sein. Hierdurch ist gewährleistet, dass die einzelnen Blechlamellen miteinander verbunden sind, gleichzeitig diese jedoch auch zueinander verdreht werden können, um eine Feinausrichtung der Blechlamellen zu erreichen.

Damit die einzelnen Blechlamellen lediglich auf einem vorbestimmten Rotationsachse zueinander verdreht werden können, kann gemäss einer weiteren vorteilhaften Ausgestaltung der vorliegenden Erfindung vorgesehen sein, dass die Erhebung und die Vertiefung kreisbogenförmig ausgestaltet sind, so dass die Erhebung in der Vertiefung entlang einer Umlaufbahn um den Mittelpunkt des Ringelements verschiebbar ist.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Fig. 1: eine Vorderansicht einer erfindungsgemässen Blechlamelle mit ersten und zweiten Ausrichtelementen sowie Verbindungselementen gemäss einer ersten Ausführungsform;
- Fig. 2: eine Vorderansicht einer Detaildarstellung eines Ausrichtelements und eines Verbindungselements;
- Fig. 3: eine Schnittansicht entlang der Schnittlinie C-C in Fig. 1 des ersten und zweiten Verbindungselements;
- Fig. 4: eine perspektivische Ansicht mehrere hintereinander liegende Blechlamellen;

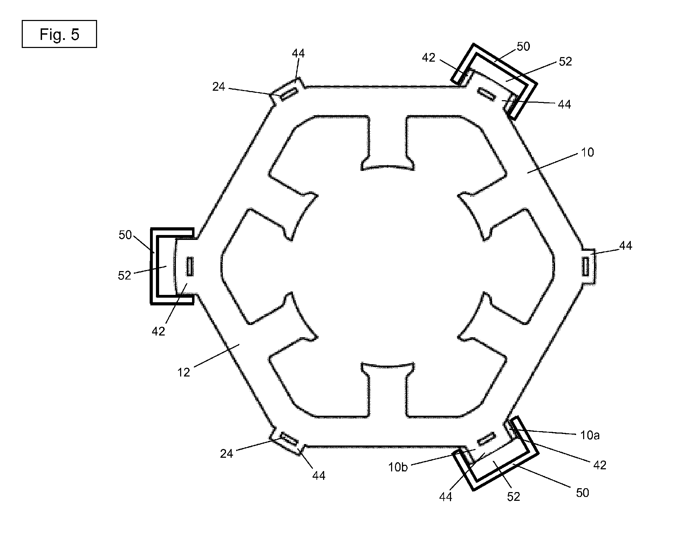

- Fig. 5: eine Vorderansicht zwei untereinander liegende Blechlamellen;
- Fig. 6: eine Vorderansicht einer Blechlamelle mit Ausrichtelementen und Verbindungselementen gemäss einer zweiten Ausführungsform;
- Fig. 7: eine Seitenansicht einer Blechlamelle gemäss der zweiten Ausführungsform;
- Fig. 8: eine perspektivische Ansicht einer Blechlamelle gemäss einer zweiten Ausführungsform;
- Fig. 9: eine Vorderansicht einer Blechlamelle gemäss einer dritten Ausführungsform; und
- Fig. 10: eine perspektivische Ansicht einer Blechlamelle gemäss einer zweiten Ausführungsform.

### Ausführungsbeispiel:

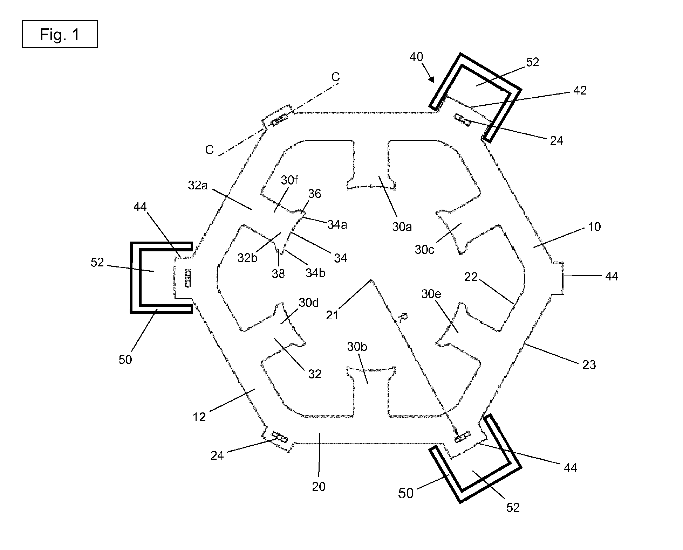

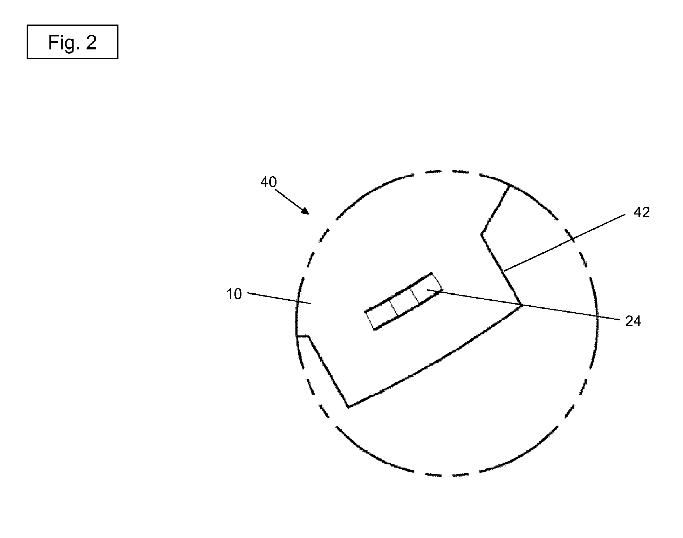

Fig. 1 und 2 zeigen eine Blechlamelle 10 zur Bildung eines Statorpakets 1 für eine (nicht gezeigte) elektromagnetische Maschine, wie z.B. ein Elektromotor, gemäss einer ersten Ausgestaltungsform. Die Blechlamelle 10 enthält dabei im Wesentlichen eine Vorderseite 12, eine Rückseite 14 und ein Ringelement 20 mit sechs Polelementen 30a, 30b, 30c, 30d, 30e, 30f.

Das Ringelement 20 weist wiederum einen Mittelpunkt 21, eine Innenseite 22, eine Aussenseite 23, ein erstes Verbindungselement 24, ein zweites Verbindungselement 25 und eine Ausrichtvorrichtung 40 auf.

Jedes Polelement 30a, 30b, 30c, 30d, 30e, 30f enthält einen Polschenkel 32 mit einem ersten Polschenkelende 32a und einem zweiten Polschenkelende 32b. Das erste Polschenkelende 32a ist an Innenseite 22 des Ringelements 20 befestigt. An dem zweiten Polschenkelende 32b ist ein Polschuh 34 mit einem ersten Polschuhende 34a und einem zweiten Polschuhende 34b positioniert. An dem ersten Polschuhende 34a befindet sich ein erster Statorzahn 36 und an dem zweiten Polschuhende 34b befindet sich ein zweiter Statorzahn 38. Das Polelement 30a, 30b, 30c, 30d, 30e, 30f dient dazu eine nicht dargestellte Spulenwicklung aufzunehmen. Wie in Fig. 1 dargestellt, sind die einzelnen Polelemente 30a, 30b, 30c, 30d, 30e, 30f in einem regelmässigen Abstand zueinander an der Innenseite 22 des Ringelements 30 positioniert und erstrecken sich in radialer Ausrichtung zu dem Mittelpunkt 21 des jeweiligen Ringelements 20.

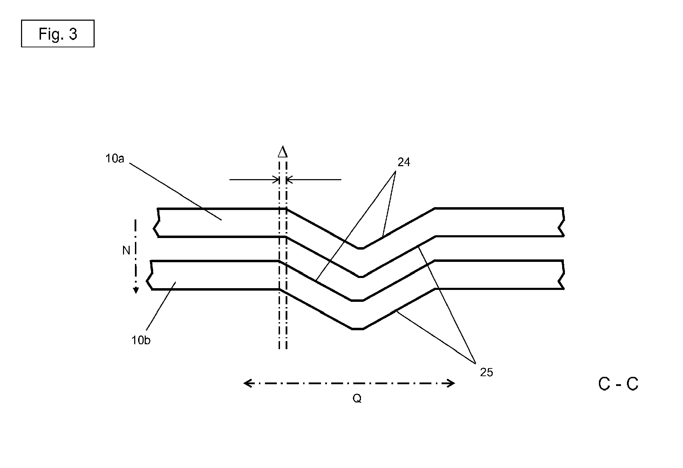

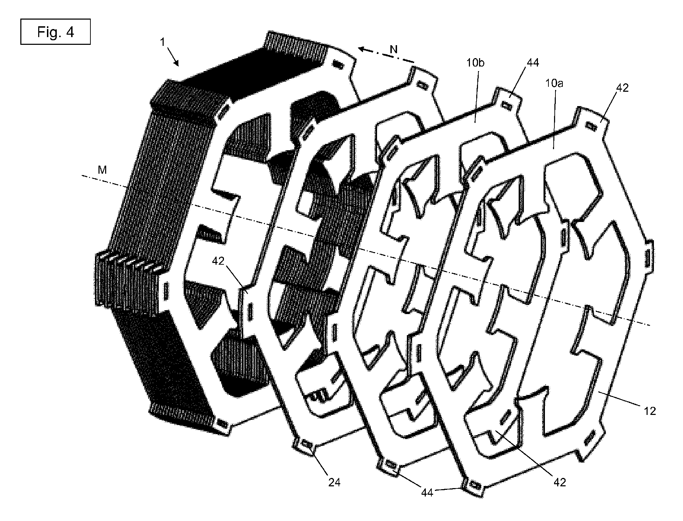

Das erste Verbindungselement 24 ist in Form einer kreisbogenförmigen Vertiefung mit einer leicht abgerundeten Spitze ausgestaltet und befindet sich auf der Vorderseite 12 der Blechlamelle 10. Im Gegensatz dazu ist das zweite Verbindungselement 25 in Form einer zu der Vertiefung des ersten Verbindungselements 24 korrespondierenden kreisbogenförmigen Erhebung ausgestaltet und auf der Rückseite 14 der Blechlamelle 10 positioniert. Das erste Verbindungselement 24 und das zweite Verbindungselement 25 sind dabei entsprechend ihrer jeweiligen Position auf der Vorderseite 12 und der Rückseite 14 der Blechlamelle 10 übereinander positioniert, so dass die Vertiefung (erstes Verbindungselement 24) und die Erhebung (zweites Verbindungselement 25) auf demselben Radius bzw. Umfang zu dem Mittelpunkt 21 des Ringelements 20 liegen. Wenn die Blechlamellen 10 zur Bildung eines Statorpakets 1 zusammengesetzt werden, wie in Fig. 4 gezeigt, wird die Erhebung (zweites Verbindungselement 25) in die Vertiefung (erstes Verbindungselement 24) in Pfeilrichtung N (vgl. Fig. 3 und 4) eingeführt. Die Erhebung ist dabei um ein gewisses Ausmass (Δ) kürzer als die Vertiefung, so dass nach der Einführung der Erhebung einer oberen Blechlamelle 10a in die Vertiefung einer unteren Blechlamelle 10b die beiden Blechlamellen 10 zur gegenseitigen Ausrichtung relativ zueinander in Pfeilrichtung Q verdreht werden können.

Wie in Fig. 1, 2 und 3 gezeigt, enthält die Ausrichtvorrichtung 40 ein erstes Ausrichtelement 42 und fünf zweite Ausrichtelemente 44. Sowohl das erste Ausrichtelement 42 als auch das zweite Ausrichtelement 44 sind im Wesentlichen in Form von rechteckigen Erhebungen an der Aussenseite 23 des Ringelements 20 gestaltet. Sowohl das erste Ausrichtelement 42 als auch das zweite Ausrichtelement 44 sind dabei jeweils zwischen zwei auf der Innenseite 22 des Ringelements 20 angeordneten Polelementen 30a, 30b, 30c, 30d, 30e, 30f positioniert. Das als Erhebung ausgestaltete erste Ausrichtelement 42 ist dabei in Umfangrichtung breiter als das ebenfalls als Erhebung ausgestaltete zweite Ausrichtelement 44. Die breitere Erhebung des ersten Ausrichtelements 42 dient dazu mit Hilfe einer Referenzvorrichtung 50 ein durch aneinander gereihte Blechlamellen 10 gebildetes Statorpaket 1 auszurichten. Entsprechend der ersten Ausgestaltungsform der Blechlamelle 10 ist die Referenzvorrichtung 50 dabei im Wesentlichen in Form eines länglichen Schachtes 52 ausgebildet, der sich koaxial zu einer Mittelachse M der Blechlamelle 10 erstreckt und in den die breitere Erhebung des ersten Ausrichtelements 42 passgenau und formschlüssig eingeführt werden kann, da die Breite des Schachts 52 der Breite der Erhebung des ersten Ausrichtelements 42 entspricht.

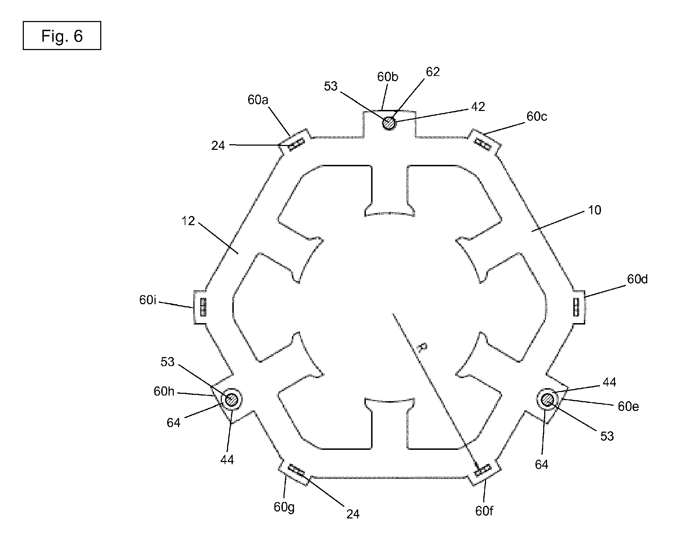

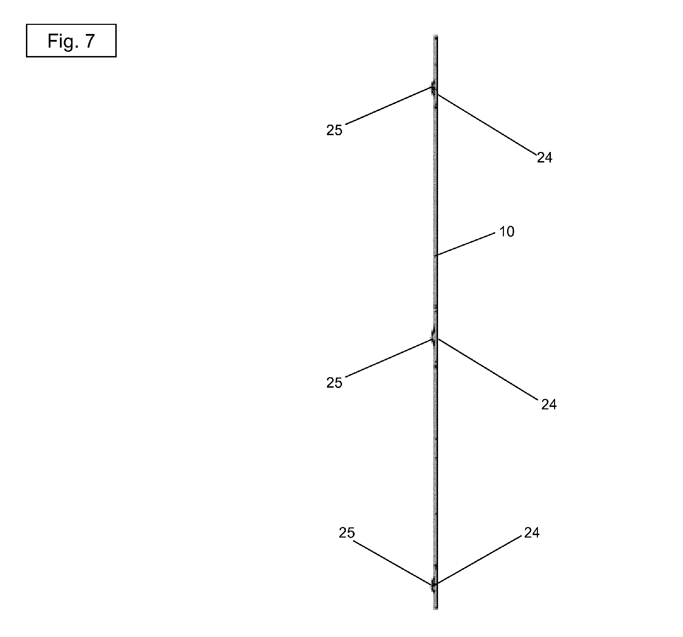

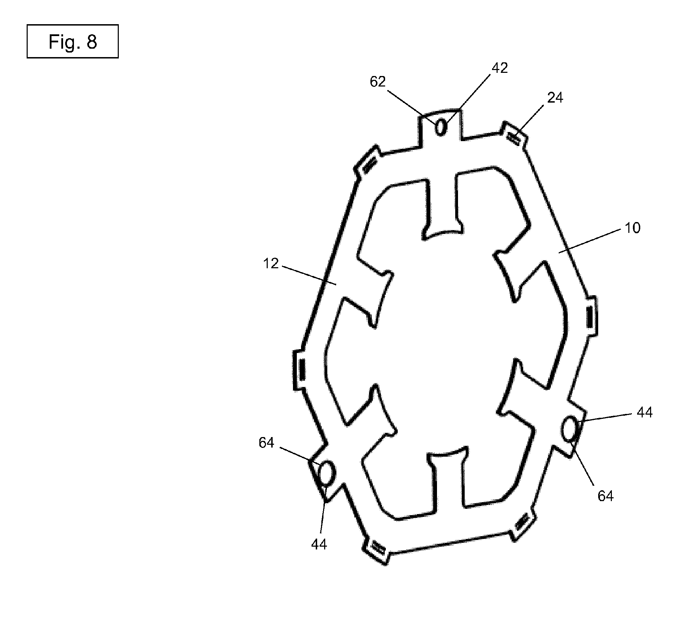

In Fig. 6, 7 und 8 ist eine zweite Ausgestaltungsform der erfindungsgemässen Blechlamelle 10 dargestellt. Entsprechend dieser zweiten Ausgestaltungsform sind an der Aussenseite 23 des Ringelements 20 neun Erhebungen 60a, 60b, 60c, 60d, 60e, 60f, 60g, 60h, 60i positioniert. Auf sechs Erhebungen 60a, 60c, 60d, 60f, 60g, 60i sind dabei jeweils ein erstes Verbindungselement 24 und ein zweites Verbindungselement 25 positioniert. Wie bereits vorstehend beschrieben, befinden sich das erste Verbindungselement 24 (in Form einer kreisbogenförmigen Vertiefung) auf der Vorderseite 12 der Blechlamelle 10 und das zweite Verbindungselement 25 (in Form einer kreisbogenförmigen Erhebung) auf der Rückseite 14 der Blechlamelle 10. Das erste Verbindungselement 24 und das zweite Verbindungselement 25 sind dabei entsprechend ihrer jeweiligen Position auf der Vorderseite 12 und der Rückseite 14 der Blechlamelle 10 übereinander positioniert, so dass die Vertiefung (erstes Verbindungselement 24) und die Erhebung (zweites Verbindungselement 25) auf demselben Radius R zu dem Mittelpunkt 21 des Ringelements 20 liegen.

Auf der Erhebung 60b ist ein erstes Ausrichtelement 42 positioniert und auf den Erhebungen 60e, 60h ist jeweils ein zweites Ausrichtelement 44 positioniert. Die Erhebungen 60a, 60b, 60c, 60d, 60e, 60f, 60g, 60h, 60i sind dabei regelmässig und symmetrisch an der Aussenseite 23 des Ringelements 20 angeordnet.

Alternativ können die Verbindungselemente 24, 25 sowie das erste Ausrichtelement 42 und das zweite Ausrichtelement 44 auch direkt auf dem Ringelement 20 angeordnet sein. Gemäss der zweiten Ausgestaltungsform in Fig. 6, 7 und 8 der Blechlamelle 10 ist sowohl das erste Ausrichtelement 42 als auch das zweite Ausrichtelement 44 jeweils in Form von Bohrungen 62, 64 durch die jeweilige Erhebung an der Aussenseite 23 des Ringelements 20 gestaltet. Der Durchmesser der Bohrung 62 des ersten Ausrichtelements 42 ist dabei kleiner als der Durchmesser der Bohrung 64 des zweiten Ausrichtelements 44. Die kleinere Bohrung 62 des ersten Ausrichtelements 42 dient ebenfalls dazu mit Hilfe einer Referenzvorrichtung 50 ein durch aneinander gereihte Blechlamellen 10 gebildetes Statorpaket 1 auszurichten. Entsprechend der zweiten Ausgestaltungsform der Blechlamelle 10 ist diese Referenzvorrichtung 50 im Wesentlichen in Form eines Stiftes 53 mit kreisrundem Durchmesser ausgestaltet. Der Durchmesser des Stiftes 53 kann passgenau und formschlüssig in die kleinere Bohrung 62 des ersten Ausrichtelements 42 eingeführt werden, da der Durchmesser des Stifts 53 der Referenzvorrichtung 50 dem Durchmesser der kleineren Bohrung 62 des ersten Ausrichtelements 42 entspricht.

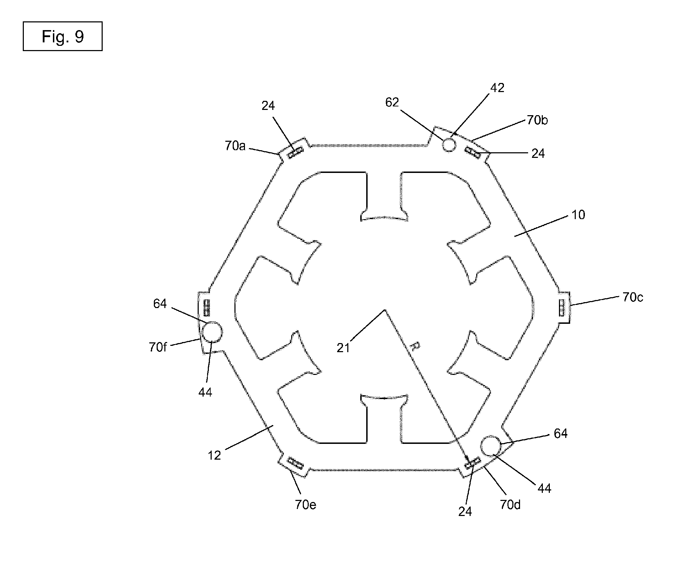

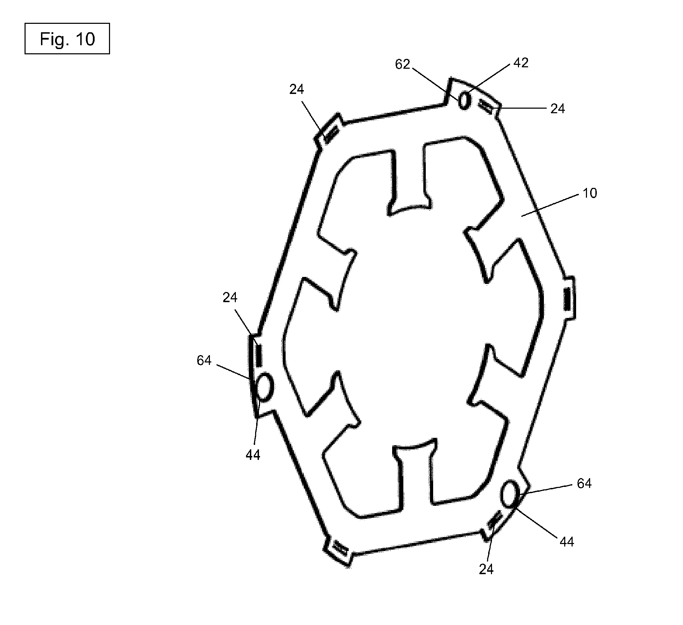

Fig. 9 und 10 zeigen eine dritte Ausführungsform der erfindungsgemässen Blechlamelle 10.

Entsprechend dieser dritten Ausgestaltungsform sind an der Aussenseite 23 des Ringelements 20 sechs Erhebungen 70a, 70b, 70c, 70d, 70e, 70f positioniert. Auf drei Erhebungen 70a, 70c, 70e sind dabei jeweils ein erstes Verbindungselement 24 und ein zweites Verbindungselement 25 positioniert. Wie ebenfalls bereits vorstehend beschrieben, befinden sich das erste Verbindungselement 24 (in Form einer kreisbogenförmigen Vertiefung) auf der Vorderseite 12 der Blechlamelle 10 und das zweite Verbindungselement 25 (in Form einer kreisbogenförmigen Erhebung) auf der Rückseite 14 der Blechlamelle 10. Das erste Verbindungselement 24 und das zweite Verbindungselement 25 sind dabei entsprechend ihrer jeweiligen Position auf der Vorderseite 12 und der Rückseite 14 der Blechlamelle 10 übereinander positioniert, so dass die Vertiefung (erstes Verbindungselement 24) und die Erhebung (zweites Verbindungselement 25) auf demselben Radius R zu dem Mittelpunkt 21 des Ringelements 20 liegen.

Auf einer Erhebung 70b sind ein erstes Ausrichtelement 42 sowie ein erstes Verbindungselement 24 und ein zweites Verbindungselement 25 positioniert. Weiterhin sind auf zwei Erhebungen 70d, 70f jeweils ein zweites Ausrichtelement 44 sowie ein erstes Verbindungselement 24 und ein zweites Verbindungselement 25 positioniert.

Ähnlich wie bei der oben beschriebenen zweiten Ausgestaltungsform der Blechlamelle 10, ist gemäss der dritten Ausgestaltungsform der Blechlamelle 10 sowohl das erste Ausrichtelement 42 als auch das zweite Ausrichtelement 44 ebenfalls jeweils in Form von Bohrungen 62, 64 durch die jeweilige Erhebung an der Aussenseite 23 des Ringelements 20 gestaltet. Der Durchmesser der Bohrung 62 des ersten Ausrichtelements 42 ist dabei kleiner als der Durchmesser der Bohrung 64 des zweiten Ausrichtelements 44. Die kleinere Bohrung 62 des ersten Ausrichtelements 42 dient ebenfalls dazu mit Hilfe einer Referenzvorrichtung 50 ein durch aneinander gereihte Blechlamellen 10 gebildetes Statorpaket 1 auszurichten. Entsprechend der dritten Ausgestaltungsform der Blechlamelle 10 ist diese Referenzvorrichtung 50 in Form eines Stiftes 53 mit kreisrundem Durchmesser ausgestaltet. Der Durchmesser des Stiftes 53 kann passgenau und formschlüssig in die kleinere Bohrung 62 des ersten Ausrichtelements 42 eingeführt werden. Die entsprechenden Ausrichtelemente 42, 44 sowie das erste und zweite Verbindungselement 24, 25 sind auf den jeweiligen Erhebungen nebeneinander positioniert. Alternativ können jedoch die entsprechenden Ausrichtelemente 42, 44 sowie das erste und zweite Verbindungselement 24, 25 auf den jeweiligen Erhebungen auch übereinander positioniert sein. Die Erhebungen sind dabei ebenfalls regelmässig und symmetrisch an der Aussenseite 23 des Ringelements 20 angeordnet.

Zur Bildung eines Statorpakets 1 werden die einzelnen Blechlamellen 10 so zueinander positioniert und aneinander gereiht, dass jeweils das als Erhebung ausgestaltete erste Verbindungselement 24 einer ersten Blechlamelle 10a zu dem als Vertiefung ausgestalteten zweiten Verbindungselement 25 einer angrenzenden Blechlamelle 10b gerichtet ist, so dass die Erhebung in die Vertiefung in Pfeilrichtung N eingeführt ist, vgl. Fig. 3 und 4. Dadurch, dass sich, wie vorstehend beschrieben, das als Erhebung ausgestaltete erste Verbindungselement 24 nicht absolut passgenau in dem als Vertiefung ausgestaltete zweite Verbindungselement 25 befindet und sowohl die Erhebung als auch die Vertiefung kreisbogenförmig ausgestaltet sind, lassen sich die einzelnen Blechlamellen 10 zu einen gewissen Grad relativ zueinander verdrehen und gegeneinander ausrichten. Mit Hilfe der ersten und zweiten Verbindungselemente 24, 25 lassen sich somit herstellungsbedingte Ungenauigkeiten an den einzelnen Blechlamellen 10 durch ein Verdrehen ausgleichen.

Darüber hinaus werden die einzelnen Blechlamellen 10 zur Bildung eines geraden Statorpakets 1 so zueinander positioniert und aneinander gereiht, dass diese entsprechend der Wellenform einzelner Blechlamellen 10 versetzt zueinander positioniert werden. Das heisst, dass zum Ausgleich einer ungewünschten Wellenform einer ersten Blechlamelle 10a die nachfolgende Blechlamelle 10b entsprechend versetzt auf diese vorangegangene Blechlamelle 10a gesetzt wird, wodurch diese Wellenform ausgeglichen und ein möglichst gerades Statorpaket 1 erzeugt werden kann.

Beim Aneinanderreihen und Ausgleichen von Ungenauigkeiten der Blechlamellen 10 ist zu beachten, dass beim versetzten Aneinanderreihen der Blechlamellen 10 entweder das erste Ausrichtelement 42 einer Blechlamelle 10b auf dem ersten Ausrichtelement 42 einer vorangegangenen Blechlamelle 10a liegt oder das erste Ausrichtelement 42 einer Blechlamelle 10b auf einem zweiten Ausrichtelement 44 einer vorangegangenen Blechlamelle 10a liegt.

Das Aneinanderreihen bzw. das Aufeinanderlegen der einzelnen Blechlamellen 10 hat dabei so zu erfolgen, dass stets die Polelemente 30a, 30b, 30c, 30d, 30e, 30f der einzelnen Blechlamellen 10 übereinander liegen. Das bedeutet, dass Blechlamellen 10 mit sechs Polelementen 30a, 30b, 30c, 30d, 30e, 30f in sechs verschiedenen Positionen aufeinander gelegt werden können. Die Anzahl der Möglichkeiten des Aufeinanderlegens der Blechlamellen 10 korrespondiert daher mit der Anzahl an Polelementen 30a, 30b, 30c, 30d, 30e, 30f an den Blechlamellen 10.

Wie in Fig. 4 dargestellt, ist das Statorpaket 1 durch das verdrehte Aufeinanderstapeln der einzelnen Blechlamellen 10 zum Zweck des Ausgleichens von Ungenauigkeiten an den Blechlamellen 10 so ausgestaltet, dass dem ersten Ausrichtelement 42 einer ersten Blechlamelle 10a zwei zweite Ausrichtelemente 44 einer nachfolgenden Blechlamelle 10b folgen. Die Reihenfolge von ersten und zweiten Ausrichtelementen 42, 44 in dem Statorpaket 1 kann jedoch entsprechend den Anforderungen an das Ausgleichen von Unebenheiten bzw. unerwünschten Wellenformen an den Blechlamellen 10 stark variieren.

Zur Ausrichtung der einzelnen Blechlamellen 10 des Statorpakets 1 wird mit Hilfe der zur jeweiligen Ausgestaltungsform der entsprechenden ersten Ausrichtelemente 42 die übereinstimmende Referenzvorrichtung 50 verwendet. Entsprechend der ersten Ausgestaltungsform werden die Blechlamellen 10 in die Referenzvorrichtung 50 geschoben, so dass der Schacht 52 dieser ersten Referenzvorrichtung 50 die breiteren ersten Ausrichtelemente 42 (Erhebungen) aufnehmen kann, um so die einzelnen Blechlamellen 10 in die entsprechende Form und Richtung bringen zu können. Dadurch, dass das zweite Ausrichtelement 44 schmäler ist als das erste Ausrichtelement 42 kann das zweite Ausrichtelement 44 in dem Schacht 52 der Referenzvorrichtung 50 zwischen den Seitenwänden des Schachts 52 verschoben bzw. zur letztendlichen Fein-Ausrichtung der Blechlamelle 10 ausgerichtet werden.

Gemäss der zweiten und dritten Ausgestaltungsform der Blechlamelle 10 und der Referenzvorrichtung 50 ist, wie bereits vorstehend beschrieben, die Referenzvorrichtung 50 in Form eines zylindrischen Stifts 53 ausgestaltet. Zum Ausrichten der Blechlamellen 10 zueinander wird die als Stift 53 ausgestaltete Referenzvorrichtung in alle Bohrungen 62, 64 der Ausrichtelemente 42, 44 eingeführt. Da die Bohrung 62 der ersten Ausrichtelemente 42 kleiner ist als die Bohrungen 64 der zweiten Ausrichtelemente 44 können die ersten Ausrichtelemente 44 passgenau auf die als Stift 53 ausgestaltete Referenzvorrichtung 50 gezogen werden.

Dadurch, dass der Durchmesser des zweiten Ausrichtelements 44 grösser ist als der Durchmesser des ersten Ausrichtelements 42 kann das zweite Ausrichtelement 44 um die die als Stift 53 ausgestaltete Referenzvorrichtung 50 verschoben bzw. zur letztendlichen Fein-Ausrichtung der Blechlamelle 10 ausgerichtet werden.

Somit werden die Blechlamellen 10 mit Hilfe der Ausrichtvorrichtung 40 und der dazu passenden Referenzvorrichtung 50 zum Erzeugen eines geraden Statorpakets 1 ausgerichtet.

## Patentansprüche

1. Blechlamelle (10), insbesondere zur Bildung eines Statorpakets (1) für eine elektromagnetische Maschine, enthaltend
- eine Vorderseite (12) und eine Rückseite (14);
- ein Ringelement (20) mit einem Mittelpunkt (21), einer Innenseite (22) und einer Aussenseite (23); sowie
- wenigstens ein erstes Polelement (30a) und ein zweites Polelement (30b), welches jeweils an der Innenseite des Ringelements (20) positioniert ist und sich in radialer Ausrichtung zu dem Mittelpunkt (21) des Ringelements (20) erstreckt;
**dadurch gekennzeichnet, dass** wenigstens eine Ausrichtvorrichtung (40) zum Ausrichten der Blechlamelle (10a) zu einer zweiten anliegenden Blechlamelle (10b) vorgesehen ist.

2. Blechlamelle (10) nach Anspruch 1,
**dadurch gekennzeichnet, dass** mindestens ein erstes Verbindungselement (24) und ein zweites Verbindungselement (25) zum Verbinden der Blechlamelle (10a) mit einer zweiten Blechlamelle (10b), wobei das erste Verbindungselemente (24) und das zweite Verbindungselement (25) auf demselben Radius (R) zu dem Mittelpunkt (21) des Ringelements (20) positioniert sind.

3. Blechlamelle (10) nach Anspruch 1 oder 2,
**dadurch gekennzeichnet, dass** die Ausrichtvorrichtung (40) wenigstens ein erstes Ausrichtelement (42) und ein zweites Ausrichtelement (44) aufweist, wobei das erste Ausrichtelement (42) ausgestaltet ist, um mit Hilfe einer Referenzvorrichtung (50) ein durch aneinander gereihte Blechlamellen (10) gebildetes Statorpaket (1) auszurichten.

4. Blechlamelle (10) nach Anspruch 3,
**dadurch gekennzeichnet, dass** das erste Ausrichtelement (42) als Erhebung auf der Aussenseite (23) des Ringelements (20) ausgestaltet ist und das zweite Ausrichtelement (44) als Erhebung auf der Aussenseite (23) des Ringelements (20) ausgestaltet ist, wobei das erste Ausrichtelement (42) breiter als das zweite Ausrichtelement (44) ist.

5. Blechlamelle (10) nach Anspruch 3,
**dadurch gekennzeichnet, dass** das erste Ausrichtelement (42) als Bohrung (62) auf der Aussenseite des Ringelements (20) ausgestaltet ist und das zweite Ausrichtelement (44) als Bohrung (64) auf der Aussenseite des Ringelements (20) ausgestaltet ist, wobei das erste Ausrichtelement (42) einen kleineren Durchmesser aufweist als das zweite Ausrichtelement (44) ist.

6. Blechlamelle (10) nach wenigstens einem der Ansprüche 3 bis 4,
**dadurch gekennzeichnet, dass** die Anzahl an Ausrichtelementen (42, 44) der Anzahl an Polelementen (30a, 30b, 30c, 30d, 30e, 30f) entspricht.

7. Blechlamelle (10) nach wenigstens einem der Ansprüche 1 bis 6,
**dadurch gekennzeichnet, dass** das erste Verbindungselement (24) auf der Vorderseite (12) der Blechlamelle (10) als eine Vertiefung ausgestaltet ist und das zweite Verbindungselement (25) auf der Rückseite (14) der Blechlamelle (10) als eine zu der Vertiefung korrespondierende Erhebung ausgestaltet ist.

8. Blechlamelle (10) nach Anspruch 7,
**dadurch gekennzeichnet, dass** die Erhebung und die Vertiefung kreisbogenförmig ausgestaltet sind, so dass die Erhebung in der Vertiefung entlang einer Umlaufbahn um den Mittelpunkt (21) des Ringelements (20) verschiebbar ist.

9. Verfahren zum Herstellen eines Statorpakets (1) bestehend aus einer Vielzahl an Blechlamellen (10) nach wenigstens einem der Ansprüche 1 bis 8,
**gekennzeichnet, durch** die Schritte
- Aneinanderreihen der Blechlamellen (10) zur Bildung eines zylindrischen Statorpakets (1), wobei die Ausrichtvorrichtung (40) einer Blechlamelle (10) um einen vorbestimmten Winkel zu der Ausrichtvorrichtung (40) einer jeweils nachfolgenden Blechlamelle (10) angeordnet ist,
- Ausrichten der einzelnen Blechlamellen (10) zueinander mit Hilfe der Ausrichtvorrichtung (40) der entsprechenden Blechlamellen (10) und einer Referenzvorrichtung (50), und
- Drehen der einzelnen Blechlamellen (10) zueinander mit Hilfe des ersten Verbindungselement (24) und des zweiten Verbindungselement (25) der entsprechenden Blechlamellen (10).
